# EUROPÄISCHE PATENTSCHRIFT

(11) **EP 3 312 753 B1**
(45) Veröffentlichungstag und Bekanntmachung des Hinweises auf die Patenterteilung: **19.06.2019**
(21) Anmeldenummer: 17001728.9
(22) Anmeldetag: 19.10.2017
(51) Int. Cl.: G06F 21/34

(54) **PHYSISCHES SICHERHEITSELEMENT ZUM ZURÜCKSETZEN EINES PASSWORTS**
PHYSICAL SECURITY ELEMENT FOR RESETTING A PASSWORD
ÉLÉMENT DE SÉCURITÉ PHYSIQUE POUR RÉINITIALISER UN MOT DE PASSE

(30) Priorität: 20.10.2016 DE 102016012543
(43) Veröffentlichungstag der Anmeldung: 25.04.2018
(73) Patentinhaber: Giesecke+Devrient Mobile Security GmbH, 81677 München (DE)
(72) Erfinder: Baldischweiler, Michael, 81825 München (DE)

(56) Entgegenhaltungen:
- SATSUYA OHATA ET AL: "Provably Secure Password Reset Protocol: Model, Definition, and Generic Construction", INTERNATIONAL ASSOCIATION FOR CRYPTOLOGIC RESEARCH,, Bd. 20160401:170648, 31. März 2016 (2016-03-31), Seiten 1-23, XP061020220, [gefunden am 2016-03-31]

## Beschreibung

Die vorliegende Erfindung ist gerichtet auf ein Verfahren zum Verifizieren einer Berechtigung zum Setzen eines neuen Passworts, wobei es möglich ist, in besonders sicherer Weise generell ein Sicherheitsmerkmal neu zu definieren, ohne dass hierbei ein Angreifer eine Möglichkeit hat, in unberechtigter Weise ein bisheriges Passwort zu überschreiben. Die vorliegende Erfindung ist ferner gerichtet auf ein Kommunikationsprotokoll sowie eine entsprechend eingerichtete Verifikationsanordnung mit einem tragbaren Datenträger und einer zentralen Recheneinheit zum Verifizieren einer Berechtigung zum Setzen eines neuen Passworts. Ferner ist die vorliegende Erfindung gerichtet auf ein Computerprodukt mit Steuerbefehlen, welche das vorgeschlagene Verfahren implementieren bzw. das vorgeschlagene Protokoll veranlassen und die Verifikationsanordnung betreiben.

Gemäß bekannten Verfahren erstellt ein Benutzer bei einem Anmelden an einem Dienst ein Benutzerkonto. Ein solches Benutzerkonto kann beispielsweise persönliche Informationen, wie den Namen, enthalten, kann aber auch zusätzliche Authentisierungsinformation beinhalten. So wird typischerweise ein Benutzername frei gewählt, der einer E-Mail-Adresse entsprechen kann. Dieser Benutzername wird auch als Benutzerkennung bezeichnet. Ferner wählt der Benutzer ein Passwort, mit dem er sich gegenüber einem Dienstanbieter authentisiert. Eine Authentifizierung erfolgt lediglich genau dann, falls das voreingestellte Passwort bei der Eingabe der Benutzerinformationen exakt wiederholt wird. Somit gibt der Benutzer seine Benutzerkennung mitsamt dem Passwort ein und erhält somit bei einer positiven Verifikation Zugang zu sensiblen Daten bzw. zu einem sensiblen Dienst.

Probleme treten hierbei auf, falls der Benutzer sein Passwort verliert bzw. vergisst. Zwar ist ihm stets seine eigene E-Mail-Adresse bekannt, er kann sich jedoch nicht zu dem sensiblen Dienst anmelden, da ihm hier die Berechtigungsinformation fehlt. Somit wird er von den sensiblen Daten bzw. Diensten vorerst ausgeschlossen.

In einem solchen bekannten Szenario wird gemäß dem Stand der Technik ein Zurücksetzen eines Passworts durchgeführt. Dies kann beispielsweise derart erfolgen, dass der Benutzer aufgefordert wird, seine E-Mail-Adresse seines Benutzerkontos anzugeben, woraufhin der Dienstanbieter einen Link zu einer Webseite übermittelt, auf der das Passwort zurückgesetzt werden kann. Somit erfolgt ein Authentisieren mittels der E-Mail-Adresse derart, dass der empfangene Link nur genau über diese E-Mail-Adresse abgerufen werden kann und somit eben auch genau diesem einen Benutzer zuzuordnen ist. Anschließend kann der Benutzer auf der bereitgestellten Webseite ein neues Passwort frei wählen. Dieses neue Passwort überschreibt dann das alte Passwort, und der Benutzer kann sich bei dem Dienstanbieter wiederum anmelden und sensible Daten bzw. sensiblen Dienste beziehen.

Hierbei ist es jedoch nachteilig, dass das Zurücksetzen der Passwörter generell softwareseitig erfolgt und die Hardware lediglich gemäß bekannter Verfahren Verwendung findet. Somit ist es möglich, dass ein Angreifer sich auch Zugang zu der E-Mail-Adresse derart verschafft, dass er den bereitgestellten Link zum Zurücksetzen des Passworts öffnen kann und somit das Passwort nach seinem Belieben frei wählen kann. Somit ist es einem Angreifer möglich, sobald er Zugriff auf eine E-Mail-Adresse hat, auch weitere Dienste bezüglich dieser E-Mail-Adresse freizuschalten. Wird beispielsweise eine E-Mail-Adresse gehackt, also das Passwort ermittelt, so ist nicht lediglich der Posteingang der E-Mail-Adresse ersichtlich, sondern vielmehr können beliebige weitere Dienst genutzt werden, die mitsamt der E-Mail-Adresse freigeschaltet werden.

Es ist daher erforderlich, ein Verfahren bereitzustellen, welches es ermöglicht, dass weitere Sicherheitsmerkmale Verwendung finden, derart, dass nicht lediglich eine Benutzerkennung bzw. eine E-Mail-Adresse als Sicherheitsmechanismus eingreift.

Demgemäß ist es eine Aufgabe der vorliegenden Erfindung ein Verfahren bereitzustellen, welches es ermöglicht, ein Sicherheitsmerkmal bzw. ein Passwort neu zu setzen, ohne hierbei lediglich auf eine E-Mail-Adresse zurückzugreifen. Ferner ist es eine Aufgabe der vorliegenden Erfindung, ein entsprechend sicheres Kommunikationsprotokoll bereitzustellen bzw. eine Kommunikationsanordnung, welche es ermöglicht, dass sich der Benutzer sicher authentisiert und hierbei in sicherer Weise sein Passwort zurücksetzen kann. Ferner ist es eine Aufgabe der vorliegenden Erfindung, ein entsprechendes Computerprogrammprodukt bereitzustellen, welches Steuerbefehle aufweist, die das vorgeschlagene Verfahren implementieren bzw. das vorgeschlagene Protokoll implementieren und die Systemanordnung betreiben.

Die Aufgabe wird gelöst durch ein Verfahren mit den Merkmalen des Patentanspruchs 1. Weitere vorteilhafte Ausgestaltungen sind in den Unteransprüchen angegeben.

Demgemäß wird ein Verfahren zum Verifizieren einer Berechtigung zum Setzen eines neuen Passworts vorgeschlagen. Hierbei erfolgt ein automatisches Erzeugen einer alternativen Benutzerkennung zu einer manuell erstellten Benutzerkennung und ein automatisches Erzeugen eines alternativen Sicherheitsmerkmals zu einem manuell erstellten Sicherheitsmerkmal. Daraufhin erfolgt ein Abspeichern der alternativen Benutzerkennung und des alternativen Sicherheitsmerkmals auf sowohl einem tragbaren Datenträger als auch auf einer zentralen Recheneinheit. Ferner erfolgt ein Übertragen der alternativen Benutzerkennung von dem tragbaren Datenträger an die zentrale Recheneinheit, worauf ein Übertragen eines Datensignals erfolgt, von der zentralen Recheneinheit an den tragbaren Datenträger, worauf der Datenträger das Datensignal unter Verwendung des alternativen Sicherheitsmerkmals verschlüsselt und an die zentrale Recheneinheit zurück übermittelt. Daraufhin erfolgt ein Auswählen des abgespeicherten alternativen Sicherheitsmerkmals durch die zentrale Recheneinheit in Abhängigkeit der übertragenen alternativen Benutzerkennung und der abgespeicherten Benutzerkennung. Ferner ist ein Entschlüsseln des zurück übermittelten Datensignals durch die zentrale Recheneinheit unter Verwendung des ausgewählten alternativen Sicherheitsmerkmals vorgesehen. Daraufhin erfolgt ein Vergleichen des entschlüsselten Datensignals mit dem übertragenen Datensignal durch die zentrale Recheneinheit und ein Überschreiben des manuell erstellten Sicherheitsmerkmals durch ein anderes Sicherheitsmerkmal im Fall eines Übereinstimmens des entschlüsselten Datensignals und des übertragenen Datensignals.

Das vorgeschlagene Verfahren betrifft ein Verifizieren einer Berechtigung zum Setzen eines neuen Passworts, da mit dem neuen Passwort sensible Daten bzw. Dienste freigeschaltet werden. Somit stellt das vorliegende Verfahren sicher, dass auch tatsächlich nur der berechtigte Benutzer das Verfahren erfolgreich ausführen kann. Dies erfolgt erfindungsgemäß unter Verwendung eines physischen Datenträgers, nämlich des tragbaren Datenträgers, der in dem Verifikationsverfahren eine zentrale Rolle spielt. Liegt dem Benutzer dieser Datenträger nicht vor, so kann er auch das vorgeschlagene Verfahren nicht erfolgreich durchlaufen und kann somit eben auch nicht ein vorhandenes Passwort neu setzen. Eine Berechtigung zum Setzen eines neuen Passworts hat typischerweise lediglich derjenige Benutzer, der das ursprüngliche Passwort gesetzt hat. Das ursprüngliche Passwort kann auch als ein manuell erstelltes Sicherheitsmerkmal bezeichnet werden. Ein Sicherheitsmerkmal ist hierbei typischerweise jegliche Authentisierungsinformation, die es in einem Zusammenwirken mit der Benutzerkennung ermöglicht, dass ein sensibler Dienst freigeschaltet wird.

Hierbei erfolgt ein automatisches Erzeugen einer alternativen Benutzerkennung sowie eines alternativen Sicherheitsmerkmals. Beispielsweise legt ein Benutzer ein Benutzerkonto an, und erzeugt hierzu eine Benutzerkennung und ein Sicherheitsmerkmal, z. B. ein Passwort. Hierbei wird von dem vorgeschlagenen Verfahren gleichzeitig oder in einem nachgelagerten Verfahrensschritt ein weiteres Benutzerkonto angelegt, welches die alternative Benutzerkennung und das alternative Sicherheitsmerkmal abspeichert. Somit liegt eine erste, herkömmliche Benutzerkennung vor, und eine zweite Benutzerkennung, welche erfindungsgemäß erstellt wird. Ebenso liegt ein erstes herkömmliches Sicherheitsmerkmal vor, welches manuell erstellt wurde, und ein zweites Sicherheitsmerkmal, welches durch das vorgeschlagene Verfahren erstellt wird.

Ein automatisches Erzeugen der Benutzerkennung und des Sicherheitsmerkmals ist deshalb möglich, da bereits bekannte Verfahren existieren, die Benutzerkennungen und Sicherheitsmerkmale überführen. Beispielsweise kann ausgehend von einer ersten Benutzerkennung ein Hashwert gebildet werden, wobei der Hashwert eine zweite Benutzerkennung darstellt. Ähnlich kann mit dem manuell erstellten Sicherheitsmerkmal verfahren werden. Auch hier sind kryptographische Verfahren bekannt, welche das Sicherheitsmerkmal in ein weiteres Sicherheitsmerkmal, beispielsweise unter Verwendung eines Hashwertes, erstellen. Ferner kennt der Fachmann Algorithmen, welche einen Eingabewert randomisiert in einen Ausgabewert überführen. Somit ist es also erfindungsgemäß möglich, eine alternative Benutzerkennung und ein alternatives Sicherheitsmerkmal zu erzeugen, ohne dass hierbei ein menschliches Zutun notwendig wäre. Somit kann also das automatische Erzeugen selbsttätig durch eine Rechneranlage erfolgen.

Dass ein alternatives Passwort vorliegt, heißt jedoch nicht, dass mit diesem alternativen Passwort bzw. Sicherheitsmerkmal bereits sensible Daten freigeschaltet werden können. Das alternative Sicherheitsmerkmal und die alternative Benutzerkennung dienen lediglich der Teilnahme an dem Verifikationsverfahren, beispielsweise um einen Link bereitzustellen, der ein Rücksetzen des Passworts bzw. des Sicherheitsmerkmals erlaubt.

Die alternativ Benutzerkennung und das alternative Sicherheitsmerkmal werden auf zwei Datenträgern hinterlegt, welche besonders vorteilhaft separat ausgestaltet sind. Hierbei kann es sich einmal um den tragbaren Datenträger handeln, auf den ein Benutzer Zugriff hat. Ferner kann dies der zentrale Server, also die zentrale Recheneinheit sein, auf dem beide Informationen, nämlich die Benutzerkennung und das Sicherheitsmerkmal, abgespeichert werden. Nach dem Ausführen eines solchen Verfahrensschritts liegen also neben den ursprünglich erzeugten Sicherheitsmerkmalen und Benutzerkennungen alternative Sicherheitsmerkmale und alternative Benutzerkennungen vor, die jeweils einem Benutzer zuzuordnen sind. Diese werden auf einem tragbaren Datenträger abgespeichert und auf einer zentralen Recheneinheit, was unabhängig voneinander erfolgt. Dies wird deshalb durchgeführt, da der jeweils andere Einheit, dem tragbaren Datenträger und der zentralen Recheneinheit in weiteren Verfahrensschritten die jeweils anderen Sicherheitsmerkmale nicht bekannt sein sollen.

Zwar wird die alternative Benutzerkennung und das alternative Sicherheitsmerkmal auf dem tragbaren Datenträger abgespeichert als auch auf dem zentralen Server, ob es sich jedoch wirklich um die zu verifizierende Datenträgereinheit handelt, muss die zentrale Recheneinheit erst in darauffolgenden Verfahrensschritten ermitteln. Somit prüft die zentrale Recheneinheit in weiteren Verfahrensschritten, ob die abgespeicherten Sicherheitsmerkmale auf dem tragbaren Datenträger auch tatsächlich diejenigen Sicherheitsmerkmale sind, mit denen sich der Benutzer verifizieren soll. Wird beispielsweise ein gefälschter tragbarer Datenträger eingebracht, so ist das weitere Verfahren nicht positiv zu durchlaufen, da die zentrale Recheneinheit feststellt, dass das alternative Sicherheitsmerkmal in der erwarteten Form nicht vorliegt.

Hierzu erfolgt ein Übertragen der alternativen Benutzerkennung von dem tragbaren Datenträger an die zentrale Recheneinheit. Somit startet der tragbare Datenträger den eigentlichen Authentifizierungsprozess und stellt eine Anfrage an die zentrale Recheneinheit. Hierzu wird die alternative Benutzerkennung übermittelt, welche von der zentralen Recheneinheit überprüft wird.

Daher erfolgt ein Übertragen eines Datensignals von der zentralen Recheneinheit an den tragbaren Datenträger derart, dass das Datensignal eine sogenannte Challenge darstellt. Das Datensignal kann hierbei beliebig gewählt werden, da lediglich verifiziert werden soll, ob der tragbare Datenträger dieses Datensignal eben auch derart verschlüsseln kann, dass es die zentrale Recheneinheit wiederum entschlüsseln kann.

Somit erfolgt ein Verschlüsseln des durch den Datenträger empfangenen Datensignals unter Verwendung des alternativen Sicherheitsmerkmals. Das alternative Sicherheitsmerkmal wiederum ist ein automatisch generiertes Passwort, welches sowohl der zentralen Recheneinheit als auch dem Datenträger vorliegt, falls der tragbare Datenträger tatsächlich der berechtigte Datenträger ist, also dem Benutzer zuzuordnen ist, dem die Benutzerkennung entspricht. Hat der tragbare Datenträger das Datensignal unter Verwendung des alternativen Sicherheitsmerkmals verschlüsselt, so übermittelt diese das dann verschlüsselte Datensignal an die zentrale Recheneinheit zurück.

Die zentrale Recheneinheit empfängt das verschlüsselte Datensignal. Ferner liegt der zentralen Recheneinheit die alternative Benutzerkennung vor, da diese bereits in vorbereitenden Verfahrensschritten übertragen wurde. Somit kann die zentrale Recheneinheit in einer Datenbank nachschauen, welches Sicherheitsmerkmal bezüglich der übermittelten bzw. abgespeicherten Benutzerkennung vorliegt. Beispielsweise speichert die zentrale Recheneinheit eine gewisse Anzahl an Benutzerprofilen, wobei jedes Benutzerprofil eine alternative Benutzerkennung und ein alternatives Sicherheitsmerkmal aufweist. Wird nunmehr in dem vorbereitenden Verfahrensschritt die alternative Benutzerkennung übertragen, so kann die zentrale Recheneinheit in dieser Datenbank nachschauen, ob die übermittelte Nutzerkennung einer bereits abgespeicherten Benutzerkennung entspricht. Ist dies nicht der Fall, so kann kein Verifizieren erfolgen. Liegt jedoch die übertragene Benutzerkennung vor, d. h. die Benutzerkennung wurde bereits abgespeichert, so wurde zu eben dieser Benutzerkennung auch ein alternatives Sicherheitsmerkmal abgespeichert. Dieses alternative Sicherheitsmerkmal wird nunmehr ausgewählt.

Das ausgewählte alternative Sicherheitsmerkmal dient nunmehr dem Entschlüsseln des von dem Datenträger zurück übermittelten Datensignals. Somit entschlüsselt die zentrale Recheneinheit genau das Datensignal, welches sie erzeugt hat, an den mobilen Datenträger übersendet hat, dieser es verschlüsselt hat und zurück an die zentrale Recheneinheit übermittelt hat.

Erfindungsgemäß ist es bei einem positiven Verifizieren bzw. Authentisieren möglich, dass die zentrale Recheneinheit ihr eigens erzeugtes Datensignal entschlüsseln kann, da sowohl dem tragbaren Datenträger als auch der zentralen Recheneinheit das entsprechende Passwort bzw. Sicherheitsmerkmal bekannt ist. Kann die zentrale Recheneinheit hingegen das verschlüsselte Datensignal nicht ordnungsgemäß entschlüsseln, so wurde dies von dem mobilen Datenträger falsch verschlüsselt, derart, dass es sich nicht um den echten bzw. erwarteten tragbaren Datenträger handelt.

Somit erfolgt ein Vergleichen des entschlüsselten Datensignals mit dem übertragenen Datensignal durch die zentrale Recheneinheit, welche hierdurch feststellen kann, dass der zu erwartende mobile Datenträger vorliegt, falls das übermittelte Datensignal dem entschlüsselten Datensignal entspricht. Somit wird sichergestellt, dass beide Einheiten, nämlich der tragbare Datenträger und die zentrale Recheneinheit, das richtige Sicherheitsmerkmal verwendet haben.

Somit ist es einem Angreifer nicht möglich, eine positive Verifikation herbeizuführen, da dieser potentiell ein Datensignal abfangen kann, dieses auch verschlüsseln kann, aber keinerlei Information darüber zur Verfügung hat, wie genau er es zu verschlüsseln hat bzw. welches Sicherheitsmerkmal er hierzu verwenden muss. Das richtige Sicherheitsmerkmal hat nur genau dasjenige Endgerät bzw. der tragbare Datenträger, dem auch die alternative Benutzerkennung und das alternative Sicherheitsmerkmal eingespeichert wurden. Somit kann kein Datenträger nachträglich mit Erfolg in den Verifikationsprozess eingreifen.

Erfolgt ein negatives Vergleichen, entspricht also das entschlüsselte Datensignal nicht dem Datensignal, welches an den tragbaren Datenträger übermittelt wurde, so wird der Prozess abgebrochen und es erfolgt keine Freigabe bzw. kein Überschreiben des gesetzten Sicherheitsmerkmals, also des Passworts.

Erfolgt ein positives Vergleichen, stimmen also entschlüsseltes Datensignal und an den tragbaren Datenträger übermitteltes Datensignal überein, so erfolgt eine Freigabe bezüglich eines Überschreibens des gesetzten Passwortes bzw. des manuell erstellten Sicherheitsmerkmals.

Alternativ oder additiv zu dem Überschreiben kann auch lediglich eine Rechtefreigabe erfolgen. Somit ist es dem Benutzer möglich, ein neues Sicherheitsmerkmal zu setzen, da der Benutzer über das richtige bzw. autorisierte Sicherheitselement, also der tragbare Datenträger, verfügt.

Somit erfolgt ein Überschreiben des manuell erstellten Sicherheitsmerkmals durch ein anderes Sicherheitsmerkmal, welches wiederum manuell erstellt werden kann. Somit erfolgt also ein neues Setzen eines Passworts, da festgestellt wurde, dass der Benutzer eben hierzu autorisiert ist. Somit kann ihm beispielsweise in einem darauffolgenden Verfahrensschritt ein Link zu einer Webseite übermittelt werden, die ihm eine Eingabemaske bereitstellt, womit er sein Passwort neu setzen kann.

Gemäß einem Aspekt der vorliegenden Erfindung erfolgt das automatische Erzeugen unter Verwendung eines Hashwerts. Dies hat den Vorteil, dass ohne menschliches Zutun, also durch eine Recheneinheit, selbsttätig und vollautomatisiert eine alternative Benutzerkennung bzw. ein alternatives Sicherheitsmerkmal erzeugt werden kann. Hierzu sind dem Fachmann weitere Verfahren geläufig, wie beispielsweise das Bilden einer Prüfsumme oder generell des randomisierte Erstellen einer Zeichenkette in Abhängigkeit des manuell erstellten Sicherheitsmerkmals bzw. der manuell erstellten Benutzerkennung.

Gemäß einem weiteren Aspekt der vorliegenden Erfindung liegt mindestens eine Benutzerkennung als eine E-Mail-Adresse vor. Dies hat den Vorteil, dass herkömmliche Benutzerkennungen Wiederverwendung finden können und dass die Freigabe zum Überschreiben derart erfolgen kann, dass ein Freigabelink an die bekannte E-Mail-Adresse versendet wird. Somit kann das Überschreiben des manuell erstellten Sicherheitsmerkmals derart erfolgen, dass nach einem positiven Verifizieren ein Link an die bekannte E-Mail-Adresse versendet wird und der Benutzer mittels des Links eine Webseite öffnen kann, die ihm eine Eingabemaske zur Rücksetzung des Passworts anbietet.

Gemäß einem weiteren Aspekt der vorliegenden Erfindung liegt der tragbare Datenträger als eine SIM-Karte, eine UICC, eine eUICC, eine Micro-SD-Karte, eine Secure-Micro-SD-Karte oder als eine Chipkarte vor. Dies hat den Vorteil, dass jegliche tragbare Datenträger Verwendung finden können, beispielsweise jegliche Art von SD-Karten oder vorzugsweise eben auch eine Chipkarte, auch als Smartcard bekannt. Somit bedarf es seitens des Benutzers keine gesonderte Hardware bzw. lediglich eine solche Hardware, die der Benutzer erfahrungsgemäß sowieso vorhält. Hierbei ist es jedoch vorteilhaft, dass auch diese Hardware, also der tragbare Datenträger, besonders geschützt ist. Beispielsweise weisen Sicherheitselemente bzw. Smartcards besonders geschützte Bereiche auf, die dann gegen ein unberechtigtes Schreiben bzw. Lesen geschützt sind. Hierzu können strukturelle, also physische Merkmale vorzusehen sein, die verhindern, dass softwareseitig ein Einbringen bzw. Auslesen von gefälschter Information erfolgt. Hierzu sind insbesondere bei Smartcards eigene Speicherbereiche bekannt, welche erfindungsgemäß Anwendung finden können.

Gemäß einem weiteren Aspekt der vorliegenden Erfindung liegt mindestens ein Sicherheitsmerkmal als ein Passwort, eine PIN, eine TAN oder als eine Antwort auf eine Sicherheitsfrage vor. Dies hat den Vorteil, dass sich das vorgeschlagene Verfahren nahtlos in bestehende Systemarchitekturen integriert und somit bereits bestehende Verfahren lediglich derart erfindungsgemäß erweitert werden müssen, dass die genannten Vorteile entstehen. So kann ein herkömmliches manuelles Setzen einer Benutzerkennung und ein herkömmliches manuelles Erstellen eines Sicherheitsmerkmals Wiederverwendung finden, wobei dann erfindungsgemäß eine alternative Benutzerkennung bzw. ein alternatives Sicherheitsmerkmal erstellt wird. Nach dem Ausführen des vorgeschlagenen Verfahrens kann dann wiederum eine Webseite genutzt werden, die bereits implementiert ist, und dem Benutzer eine Eingabemaske vorhält, anhand derer er sein Passwort neu setzen kann.

Gemäß einem weiteren Aspekt der vorliegenden Erfindung kommunizieren der tragbare Datenträger und die zentrale Recheneinheit unter Verwendung eines Telekommunikationsnetzes. Dies hat den Vorteil, dass das Verifizieren auch entfernt durchgeführt werden kann, wobei lediglich eine Datenverbindung zu dem tragbaren Datenträger und dem Server bzw. der zentralen Recheneinheit vorgehalten werden muss. Insbesondere ist es vorteilhaft, hierbei weitere technische Einrichtungen vorzuhalten.

Gemäß einem weiteren Aspekt der vorliegenden Erfindung ist der mobile Datenträger an elektronische Komponenten angeschlossen, die geeignet sind, Rechenschritte auszuführen. Dies hat den Vorteil, dass die vorgeschlagenen Verfahrensschritte zumindest teilweise durch den bzw. für den mobilen Datenträger durchgeführt werden. Bei den Rechenschritten kann es sich vorzugsweise um die Verfahrensschritte handeln, die auf Seiten des mobilen Datenträgers bzw. des tragbaren Datenträgers notwendig sind. Beispielsweise kann der tragbare Datenträger selbst über die entsprechenden Komponenten verfügen, wie es beispielsweise bei einer Smartcard der Fall ist. Hierbei handelt es sich also um eine mobile Recheneinheit, wie beispielsweise eine Smartcard, welche entsprechende Schaltkreise vorhält. Hierbei kann es sich jedoch auch um ein Mobiltelefon handeln, in das der mobile Datenträger bzw. der tragbare Datenträger eingelegt wird. Somit ist das Mobiltelefon eingerichtet, die erforderlichen Rechenschritte durchzuführen. Analog verhält es sich bei einem Notebook, welches dann seinen Prozessor zur Durchführung der Verfahrensschritte bereitstellt.

Gemäß einem weiteren Aspekt der vorliegenden Erfindung wird der tragbare Datenträger mittels einer Luftschnittstelle ausgelesen. Dies hat den Vorteil, dass beispielsweise eine Smartcard bzw. eine Chipkarte verwendet werden kann, die dann an ein entsprechendes Lesegerät gehalten wird und hierdurch veranlasst, dass ein Übertragen der alternativen Benutzerkennung stattfindet. Ferner ist es möglich, dass ein Mobiltelefon Verwendung findet, welches entsprechend beispielsweise mittels des Telekommunikationsnetzes mit der zentralen Recheneinheit kommuniziert.

Gemäß einem weiteren Aspekt der vorliegenden Erfindung erfolgt das Übertragen der alternativen Benutzerkennung von dem tragbaren Datenträger an die zentrale Recheneinheit unverschlüsselt. Dies hat den Vorteil, dass weitere unnötige Verschlüsselungsschritte eingespart werden. Das Verfahren ist dennoch sicher, da auch, falls die Benutzerkennung abgefangen wird, das Sicherheitsmerkmal von beiden Seiten, also dem tragbaren Datenträger und der zentralen Recheneinheit, verwendet wird. Somit kann auch ein Angreifer, dem die Benutzerkennung vorliegt, keine positive Verifikation betreiben, da eben das Sicherheitsmerkmal nicht vorhanden ist.

Gemäß einem weiteren Aspekt der vorliegenden Erfindung wird das Datensignal unter Verwendung einer Zufallszahl erzeugt. Dies hat den Vorteil, dass eine nicht vorhersagbare Zufallszahl erzeugt wird und somit kein bereits aufgezeichneter Nachrichtenaustausch Verwendung finden kann. Beispielsweise könnte ein Angreifer ein erfolgreiches Verifizieren mithören und somit eben dieses Verifizieren beiden Endgeräten, also dem tragbaren Datenträger und der zentralen Recheneinheit, vorspielen. Somit würde er auch ein Überschreiben des Sicherheitsmerkmals veranlassen können. Dies ist aber erfindungsgemäß deshalb nicht möglich, da die Zufallszahl bei jeder Verifikation neu erzeugt werden kann und somit auch jeder Verifikationsprozess eindeutig bzw. einmalig abläuft. Dem Fachmann sind hierbei Algorithmen bekannt, die eine solche Zufallszahl erzeugen.

Gemäß einem weiteren Aspekt der vorliegenden Erfindung erfolgt das Auswählen des abgespeicherten alternativen Sicherheitsmerkmals derart, dass aus mehreren abgespeicherten alternativen Benutzerkennungen diejenige ausgewählt wird, welche mit der empfangenen alternativen Benutzerkennung übereinstimmt und für die das alternative Sicherheitsmerkmal abgespeichert wurde. Dies hat den Vorteil, dass auf Seiten der zentralen Recheneinheit überprüft wird, ob die empfangene Benutzerkennung überhaupt abgespeichert wurde und ob überhaupt der tragbare Datenträger berechtigt ist, an dem Verifikationsprozess teilzunehmen. Entspricht die übertragene Benutzerkennung nicht der abgespeicherten Benutzerkennung, so wird das Verfahren abgebrochen, und das tragbare Endgerät bzw. der tragbare Datenträger kann sich nicht erfolgreich verifizieren. Es wird geschlossen, dass ein Angreifer vorliegt, da die alternative Benutzerkennung nicht bekannt ist.

Gemäß einem weiteren Aspekt der vorliegenden Erfindung erfolgt in Abhängigkeit des Vergleichens des entschlüsselten Datensignals mit dem übertragenen Datensignal durch die zentrale Recheneinheit eine Freigabe einer Schreibberechtigung auf das manuell erstellte Sicherheitsmerkmal. Dies hat den Vorteil, dass alternativ oder additiv zu dem Überschreiben lediglich eine Freigabe einer Schreibberechtigung auf das vorhandene Passwort erfolgt. Somit kann das vorgeschlagene Verfahren in bestehende Systeme derart integriert werden, dass eine Schnittstelle die Freigabe abgreift und den Benutzer dann auffordert, gemäß bekannter Verfahren sein Passwort neu zu setzen. Dies ist deshalb sicher, da der Benutzer positiv authentifiziert wurde und er somit sein eigenes Passwort überschreiben darf.

Die Aufgabe wird auch gelöst durch ein Kommunikationsprotokoll zum Verifizieren einer Berechtigung zum Setzen eines neuen Passworts, das die beschriebenen Verfahrensschritte jeweils als Kommunikationsschritte bzw. Bearbeitungsschritte vorsieht. Dieses Kommunikationsprotokoll kann beispielsweise in der Verifizierungsanordnung Einsatz finden, wie sie im Folgenden beschrieben wird.

Die Aufgabe wird auch gelöst durch die Verifizierungsanordnung mit einem tragbaren Datenträger und einer zentralen Recheneinheit zum Verifizieren einer Berechtigung zum Setzen eines neuen Passworts, welche eingerichtet sind, in ihrem Zusammenwirken die vorgeschlagenen Verfahrensschritte durchzuführen.

Ferner wird die Aufgabe gelöst durch ein Computerprogrammprodukt mit Steuerbefehlen, welche das vorgeschlagene Verfahren implementieren bzw. die vorgeschlagene Kommunikationsanordnung betreiben. Ferner ist die Erfindung gerichtet auf ein Computerprogrammprodukt, welches das vorgeschlagene Protokoll implementiert bzw. bereitstellt.

Erfindungsgemäß ist es besonders vorteilhaft, dass das Verfahren Verfahrensschritte bereithält, welche mittels struktureller Merkmale in der Kommunikationsanordnung abgebildet werden können. Ferner hält die Kommunikationsanordnung bzw. der mobile Datenträger und die zentrale Recheneinheit strukturelle Merkmale vor, welche eben auch als Verfahrensschritte implementiert werden können. Ferner ist es möglich, alle vorgeschlagenen Verfahrensschritte auch in dem vorgeschlagenen Protokoll vorzusehen. Hierzu können weitere Komponenten vorzusehen sein, welche ein Ausführen des vorgeschlagenen Protokolls veranlassen.

Die Erfindung wird im Folgenden anhand der beigefügten Figuren näher erläutert. Es zeigt:
- Fig. 1:: ein Verfahren zum Zurücksetzen eines Passworts gemäß einem Aspekt der vorliegenden Erfindung; und
- Fig. 2:: eine Kommunikationsanordnung zum Ausführen des vorgeschlagenen Verfahrens gemäß einem weiteren Aspekt der vorliegenden Erfindung.

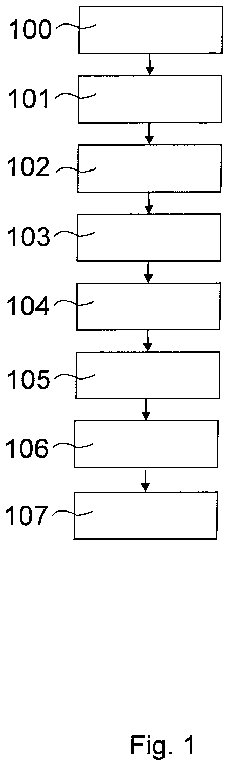

In Fig. 1 ist das vorgeschlagene Verfahren anhand eines schematischen Ablaufdiagramms gezeigt. Hierbei sind Teilschritte zu übergeordneten Verfahrensschritten zusammengefasst, um die Übersichtlichkeit zu wahren. Der Fachmann erkennt hierbei, dass einzelne Verfahrensschritte iterativ und/oder in anderer Reihenfolge ausgeführt werden können. Insbesondere sind die Verfahrensschritte von verteilten Komponenten auszuführen.

Somit wird ein Verfahren zum Verifizieren einer Berechtigung zum Setzen eines neuen Passworts gezeigt mit den Verfahrensschritten des automatischen Erzeugens 100A einer alternativen Benutzerkennung zu einer manuell erstellten Benutzerkennung und eines automatischen Erzeugens 100B eines alternativen Sicherheitsmerkmals zu einem manuell erstellten Sicherheitsmerkmal. Ferner erfolgt ein Abspeichern 101 der alternativen Benutzerkennung und des alternativen Sicherheitsmerkmals auf sowohl einem tragbaren Datenträger als auch auf einer zentralen Recheneinheit. Daraufhin erfolgt ein Übertragen 102 der alternativen Benutzerkennung von dem tragbaren Datenträger an die zentrale Recheneinheit. Ferner erfolgt ein Übertragen 103A eines Datensignals von der zentralen Recheneinheit an den tragbaren Datenträger, worauf der Datenträger das Datensignal unter Verwendung des alternativen Sicherheitsmerkmals verschlüsselt 103B und an die zentrale Recheneinheit zurückübermittelt 103C. Daraufhin erfolgt ein Auswählen 104 des abgespeicherten 101 alternativen Sicherheitsmerkmals durch die zentrale Recheneinheit in Abhängigkeit der übertragenen 102 alternativen Benutzerkennung und der abgespeicherten 101 Benutzerkennung. Daraufhin erfolgt ein Entschlüsseln 105 des zurückübermittelten 103C Datensignals durch die zentrale Recheneinheit unter Verwendung des ausgewählten 104 alternativen Sicherheitsmerkmals. Daraufhin erfolgt ein Vergleichen 106 des entschlüsselten 105 Datensignals mit dem übertragenen 103A Datensignal durch die zentrale Recheneinheit sowie ein Überschreiben 107 des manuell erstellten Sicherheitsmerkmals durch ein anderes Sicherheitsmerkmal im Falle eines Übereinstimmens des entschlüsselten 105 Datensignals und des übertragenen 103A Datensignals.

Vorliegend lassen sich beispielsweise die Verfahrensschritte 100A, 100B sowie die Verfahrensschritte 103A, 103B und 103C jeweils zu einem Verfahrensschritt zusammenfassen. Ferner ist es jedoch auch möglich, weitere Verfahrensschritte aufzuteilen bzw. durch die einzelnen Komponenten zu implementieren.

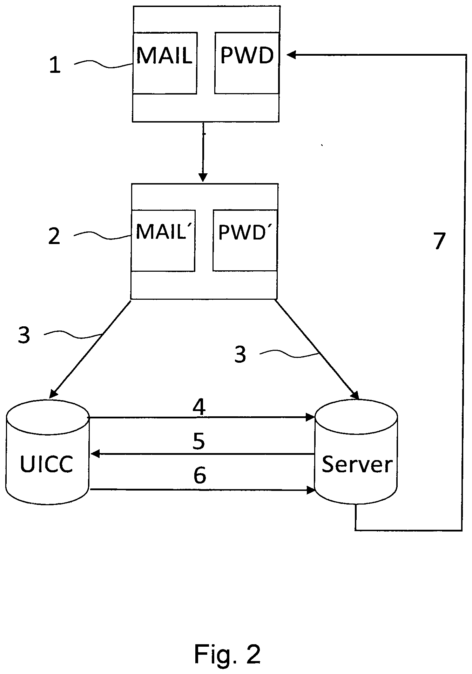

Fig. 2 zeigt eine Kommunikationsanordnung, welche das vorgeschlagene Verfahren implementiert bzw. welches gemäß dem vorgeschlagenen Protokoll betrieben wird. Hierbei erfolgt ein Anlegen eines Passwortes, welches beispielsweise herkömmlich angelegt werden kann. Bezugszeichen 1 zeigt hierzu ein herkömmliches Benutzerprofil aufweisend eine E-Mail-Adresse und ein Passwort. In einem darauffolgenden Verfahrensschritt wird zu dem angelegten Benutzerkonto ein weiteres Benutzerkonto erzeugt, welches eine alternative Benutzerkennung sowie ein alternatives Sicherheitsmerkmal aufweist. Hierbei kann es sich um einen Hashwert der ursprünglichen Benutzerkennung bzw. des ursprünglichen Sicherheitsmerkmals handeln. Ferner kann das hierdurch erzeugte Geheimnis auch in Abhängigkeit eines kryptographischen Schlüssels erzeugt werden. Somit besteht das Geheimnis z. B. aus einer alternativen Benutzerkennung, z. B. einem Hashwert der ursprünglichen Benutzerkennung und einem zugeordneten kryptographischen Schlüssel. Dies ist unter Bezugszeichen 2 veranschaulicht.

Ferner erfolgt ein Abspeichern des Geheimnisses im Sicherheitselement, also im tragbaren Datenträger und im Server, was unter Bezugszeichen 3 gezeigt ist.

Mittels des Sicherheitselements bzw. des tragbaren Datenträgers erfolgt ein Passwort-Reset bzw. dieses wird ausgelöst, indem die alternative Benutzerkennung an den Server gesendet wird, wie es in Verfahrensschritt 4 angezeigt wird.

In Verfahrensschritt 5 sendet der Server eine Antwort, z. B. eine Zufallszahl, an das Sicherheitselement, also den tragbaren Datenträger. Das Sicherheitselement verschlüsselt die Antwort mit dem kryptographischen Schlüssel und sendet die verschlüsselte Antwort an den Server zurück, was unter Bezugszeichen 6 gezeigt ist.

Der Server wählt anhand der übermittelten Benutzerkennung den kryptographischen Schlüssel aus und entschlüsselt die verschlüsselte Antwort des Sicherheitselements.

In einem Verfahrensschritt 7 sendet der Server eine E-Mail an den Benutzer, um ein Passwort-Reset auszuführen, falls die gesendete und entschlüsselte Antwort übereinstimmen.

Somit bietet das vorgeschlagene Verfahren eine hohe Sicherheit insbesondere bei Diensten, die als Kennung die E-Mail-Adresse eines Benutzers verwenden.

Im Folgenden werden weitere Aspekte angeführt, welche sich mit den vorbeschriebenen Aspekten kombinieren lassen. Beispielhaft kann das Verfahren wie folgt ausgeführt werden:
Noch bevor ein Benutzer das ursprüngliche Passwort vergessen hat, also beispielsweise bereits bei einem Anlegen eines Accounts, wird ein zusätzliches Geheimnis in einem sicheren Element des Benutzers hinterlegt. Dies kann beispielsweise eine SIM-Karte, ein UICC, ein eUICC oder eine Secure-Micro-SD-Karte sein. Diese Karten können im Smartphone des Benutzers verbaut sein. Vorzugsweise wird eine kontaktlose Chipkarte vorgesehen, die unabhängig vom Smartphone des Benutzers ist. Verliert der Benutzer sein Smartphone, ist ansonsten auch die Möglichkeit zum Zurücksetzen des Passworts nicht gegeben. Aus diesem Grund wird im weiteren Text eine Chip karte, insbesondere eine kontaktlose Chipkarte, besonders bevorzugt.

Das Geheimnis besteht im einfachsten Fall aus einer alternativen Benutzerkennung, die beispielsweise mittels Hash aus der ursprünglichen Benutzerkennung ermittelt wird sowie aus einem kryptographischen Schlüssel, der dieser alternativen Benutzerkennung zugeordnet ist. Aus Sicherheitsgründen ist der kryptographische Schlüssel vorzugsweise asymmetrisch, damit selbst bei einem Einbruch in den Dienstserver keine Information gestohlen werden kann, die ein Zurücksetzen von Passwörtern erlaubt.

Die Chipkarte, also die vorzugsweise kontaktlose Chipkarte, wird von dem Benutzer an einem sicheren Ort aufbewahrt.

Möchte der Benutzer das Passwort des Dienstes zurücksetzen, verwendet dieser die Chipkarte. Mit Hilfe eines Smartphones, PCs oder Notebooks oder dergleichen löst diese den Passwort-Reset beim Dienst aus. Hierfür wird die alternative Benutzerkennung an den Dienstserver gesendet. Dies kann unverschlüsselt geschehen, da aus der alternativen Benutzerkennung aufgrund des Hashes die ursprüngliche Benutzerkennung, z. B. die E-Mail-Adresse, nicht ersichtlich ist.

Der Server antwortet mit einer Challenge, z. B. einer Zufallszahl, die die Chipkarte mit dem kryptographischen Schlüssel verschlüsselt und an den Server zurücksendet.

Anhand der alternativen Benutzerkennung kann der Server nun den richtigen kryptographischen Schlüssel auswählen und die verschlüsselte Challenge entschlüsseln. Stimmen gesendete und empfangene Challenge überein, sendet der Server eine E-Mail an den entsprechenden Account des Benutzers. Diese E-Mail ist notwendig, um bei einem Diebstahl der Chipkarte einen unberechtigten Zugriff auf den Dienst zu verhindern. Der Angreifer benötigt dann nicht nur die Chipkarte, sondern auch den Zugriff auf den E-Mail-Account.

Mit der E-Mail erhält der Benutzer dann den üblichen Link, um ein Passwort-Reset durchführen zu können bzw. er erhält ein temporäres Passwort. Das temporäre Passwort überschreibt hierbei das ursprünglich gesetzte Passwort.

Somit ermöglicht das vorgeschlagene Verfahren ein Passwort-Reset mit hoher Sicherheit bei Diensten, die als Kennung die E-Mail-Adresse verwenden.

## Patentansprüche

1. Verfahren zum Verifizieren einer Berechtigung zum Setzen eines neuen Passworts, mit:
- Automatisches Erzeugen (100A) einer alternativen Benutzerkennung zu einer manuell erstellten Benutzerkennung und automatisches Erzeugen (100B) eines alternativen Sicherheitsmerkmals zu einem manuell erstellten Sicherheitsmerkmal;
- Abspeichern (101) der alternativen Benutzerkennung und des alternativen Sicherheitsmerkmals auf sowohl einem tragbaren Datenträger als auch auf einer zentralen Recheneinheit;
- Übertragen (102) der alternativen Benutzerkennung von dem tragbaren Datenträger an die zentrale Recheneinheit;
- Übertragen (103A) eines Datensignals von der zentralen Recheneinheit an den tragbaren Datenträger, worauf der Datenträger das Datensignal unter Verwendung des alternativen Sicherheitsmerkmals verschlüsselt (103B) und an die zentrale Recheneinheit zurück übermittelt (103C);
- Auswählen (104) des abgespeicherten (101) alternativen Sicherheitsmerkmals durch die zentrale Recheneinheit in Abhängigkeit der übertragenen (102) alternativen Benutzerkennung und der abgespeicherten (101) Benutzerkennung;
- Entschlüsseln (105) des zurück übermittelten (103C) Datensignals durch die zentrale Recheneinheit unter Verwendung des ausgewählten (104) alternativen Sicherheitsmerkmals;
- Vergleichen (106) des entschlüsselten (105) Datensignals mit dem übertragenen (103A) Datensignal durch die zentrale Recheneinheit; und
- Überschreiben (107) des manuell erstellten Sicherheitsmerkmals durch ein anderes Sicherheitsmerkmal im Falle eines Übereinstimmens des entschlüsselten (105) Datensignals und des übertragenen (103A) Datensignals, wobei
- das Übertragen (102) der alternativen Benutzerkennung von dem tragbaren Datenträger an die zentrale Recheneinheit unverschlüsselt erfolgt,
- wobei das Auswählen (104) des abgespeicherten (101) alternativen Sicherheitsmerkmals derart erfolgt, dass aus mehreren abgespeicherten alternativen Benutzerkennungen diejenige ausgewählt wird, welche mit der empfangenen alternativen Benutzerkennung übereinstimmt und für die das alternative Sicherheitsmerkmal abgespeichert wurde.

2. Verfahren nach Anspruch 1, **dadurch gekennzeichnet, dass** das automatische Erzeugen (100A) unter Verwendung eines Hashwerts erfolgt.

3. Verfahren nach Anspruch 1 oder 2, **dadurch gekennzeichnet, dass** mindestens eine Benutzerkennung als eine E-Mail-Adresse vorliegt.

4. Verfahren nach einem der vorhergehenden Ansprüche, **dadurch gekennzeichnet, dass** der tragbare Datenträger als eine SIM-Karte, eine UICC, eine eUICC, eine Micro-SD-Karte, eine secure Micro-SD-Karte oder als eine Chipkarte vorliegt.

5. Verfahren nach einem der vorhergehenden Ansprüche, **dadurch gekennzeichnet, dass** mindestens ein Sicherheitsmerkmal als ein Passwort, eine PIN, eine TAN oder als eine Antwort auf eine Sicherheitsfrage vorliegt.

6. Verfahren nach einem der vorhergehenden Ansprüche, **dadurch gekennzeichnet, dass** der tragbare Datenträger und die zentrale Recheneinheit unter Verwendung eines Telekommunikationsnetzes kommunizieren.

7. Verfahren nach einem der vorhergehenden Ansprüche, **dadurch gekennzeichnet, dass** der tragbare Datenträger an elektronische Komponenten angeschlossen ist, die geeignet sind Rechenschritte auszuführen.

8. Verfahren nach einem der vorhergehenden Ansprüche, **dadurch gekennzeichnet, dass** der tragbare Datenträger mittels einer Luftschnittstelle ausgelesen wird.

9. Verfahren nach einem der vorhergehenden Ansprüche, **dadurch gekennzeichnet, dass** das Datensignal unter Verwendung einer Zufallszahl erzeugt wird.

10. Verfahren nach einem der vorhergehenden Ansprüche, **dadurch gekennzeichnet, dass** in Abhängigkeit des Vergleichens (106) des entschlüsselten (105) Datensignals mit dem übertragenen (103A) Datensignal durch die zentrale Recheneinheit eine Freigabe einer Schreibberechtigung auf das manuell erstellte Sicherheitsmerkmal erfolgt.

11. Verifizierungsanordnung mit einem tragbaren Datenträger und einer zentralen Recheneinheit zum Verifizieren einer Berechtigung zum Setzen eines neuen Passworts, welche eingerichtet sind in ihrem Zusammenwirken das Verfahren nach Anspruch 1 durchzuführen.

12. Computerprogrammprodukt mit Steuerbefehlen, welche dazu geeignet sind, bei Ausführung durch eine Verifizierungsanordnung das Verfahren gemäß einem der Ansprüche 1 bis 10 implementieren.

## Claims

1. A method for verifying an authorization for setting a new password, with:
automatically generating (100A) an alternative user identifier for a manually created user call sign and automatically generating (100B) an alternative security feature for a manually created security feature;
- storing (101) the alternative user identifier and the alternative security feature on a portable data carrier as well as on a central processing unit;
- transferring (102) the alternative user identifier from the portable data carrier to the central processing unit;
- transferring (103A) a data signal from the central processing unit to the portable data carrier whereupon the data carrier encrypts the data signal while employing the alternative security feature (103B) and transmits it back to the central processing unit (103C);
- selecting (104) the stored (101) alternative security feature by the central processing unit in dependence on the transferred (102) alternative user identifier and the stored (101) user identifier;
- decrypting (105) the data signal transmitted back (103C) by the central processing unit while employing the selected (104) alternative security feature;
- comparing (106) the decrypted (105) data signal with the transferred (103A) data signal by the central processing unit; and
- overwriting (107) the manually created security feature with another security feature in case of a match of the decrypted (105) data signal and the transferred (103A) data signal, wherein
- the transferring (102) of the alternative user identifier from the portable data carrier to the central processing unit is effected in unencrypted form, wherein the selecting (104) of the stored (101) alternative security feature is effected such that from several stored alternative user identifiers that one is selected which matches the received alternative user identifier and for which the alternative security feature was stored.

2. The method according to claim 1, **characterized in that** the automatic generating (100A) occurs while employing a hash value.

3. The method according to claim 1 or 2, **characterized in that** at least one user identifier is present as an e-mail address.

4. The method according to any of the preceding claims, **characterized in that** the portable data carrier is present as a SIM card, a UICC, an eUICC, a Micro SD card, a secure MicroSD card or as a chip card.

5. The method according to any of the preceding claims, **characterized in that** at least one security feature is present as a password, a PIN, a TAN or as a response to a security question.

6. The method according to any of the preceding claims, **characterized in that** the portable data carrier and the central processing unit communicate while employing a telecommunication network.

7. The method according to any of the preceding claims, **characterized in that** the portable data carrier is connected to electronic components which are suitable for carrying out computation steps.

8. The method according to any of the preceding claims, **characterized in that** the portable data carrier is read out by means of an over-the-air interface.

9. The method according to any of the preceding claims, **characterized in that** the data signal is generated while employing a random number.

10. A method according to any of the preceding claims, **characterized in that** in dependence on the comparing (106) of the decrypted (105) data signals with the transferred (103A) data signal by the central processing unit, a release of a write authorization on the manually created security feature is effected.

11. A verification arrangement having a portable data carrier and a central processing unit for verifying an authorization for setting a new password which are devised to carry out in their interaction the procedure according to claim 1.

12. A computer program product having control commands which are suitable upon implementation by a verification arrangement to implement the procedure according to any of claims 1 to 10.

## Revendications

1. Procédé de vérification d'une autorisation d'établir un nouveau mot de passe, comprenant :
- génération automatique (100A) d'un identifiant alternatif utilisateur relatif à un identifiant utilisateur créé manuellement, et génération automatique (100B) d'une caractéristique alternative de sécurité relative à une caractéristique de sécurité créée manuellement ;
- mémorisation (101) de l'identifiant alternatif utilisateur et de la caractéristique alternative de sécurité tant sur un support de données portable que sur une unité de calcul centrale ;
- transmission (102) de l'identifiant alternatif utilisateur du support de données portable à l'unité de calcul centrale ;
- transmission (103A) d'un signal de données de l'unité de calcul centrale au support de données portable, à la suite de quoi le support de données, en utilisant la caractéristique alternative de sécurité, crypte (103B) le signal de données et le transfère (103C) à l'unité de calcul centrale ;
- sélection (104), par l'unité de calcul centrale, de la caractéristique alternative de sécurité mémorisée (101), en fonction de l'identifiant alternatif utilisateur transmis (102) et de l'identifiant utilisateur mémorisé (101) ;
- décryptage (105), par l'unité de calcul centrale, du signal de données retransféré (103C), en utilisant la caractéristique alternative de sécurité sélectionnée (104) ;
- comparaison (106), par l'unité de calcul centrale, du signal de données décrypté (105) avec le signal de données transmis (103A) ; et
- écrasement (107) de la caractéristique de sécurité créée manuellement en la remplaçant par une autre caractéristique de sécurité dans le cas de la concordance du signal de données décrypté (105) avec le signal de données transmis (103A), cependant que
- la transmission (102) de l'identifiant alternatif utilisateur du support de données portable à l'unité de calcul centrale a lieu de façon non cryptée,
- cependant que la sélection (104) de la caractéristique alternative de sécurité mémorisée (101) a lieu de telle manière que, à partir de plusieurs identifiants alternatifs utilisateur mémorisés, c'est celui qui concorde avec l'identifiant alternatif utilisateur reçu et pour lequel la caractéristique alternative de sécurité a été mémorisée qui est sélectionné.

2. Procédé selon la revendication 1, **caractérisé en ce que** la génération automatique (100A) a lieu en utilisant une valeur de hachage.

3. Procédé selon la revendication 1 ou 2, **caractérisé en ce qu'**au moins un identifiant utilisateur se trouve sous forme d'une adresse e-mail.

4. Procédé selon une des revendication précédentes, **caractérisé en ce que** le support de données portable se trouve sous forme d'une carte SIM, d'une UICC, d'une eUICC, d'une carte micro SD, d'une carte micro SD secure ou d'une carte à puce.

5. Procédé selon une des revendications précédentes, **caractérisé en ce qu'**au moins une caractéristique de sécurité se trouve sous forme d'un mot de passe, d'un PIN, d'un TAN ou d'une réponse à une question de sécurité.

6. Procédé selon une des revendications précédentes, **caractérisé en ce que** le support de données portable et l'unité de calcul centrale communiquent en utilisant un réseau de télécommunication.

7. Procédé selon une des revendications précédentes, **caractérisé en ce que** le support de données portable est raccordé à des composants électroniques appropriés à exécuter des étapes de calcul.

8. Procédé selon une des revendications précédentes, **caractérisé en ce que** le support de données portable est lu au moyen d'une interface radio.

9. Procédé selon une des revendications précédentes, **caractérisé en ce que** le signal de données est généré en utilisant un nombre aléatoire.

10. Procédé selon une des revendications précédentes, **caractérisé en ce que**, en fonction de la comparaison (106), par l'unité de calcul centrale, du signal de données décrypté (105) avec le signal de données transmis (103A), un déblocage d'une autorisation d'écriture a lieu à la suite de la caractéristique de sécurité créée manuellement.

11. Agencement de vérification comprenant un support de données portable et une unité de calcul centrale pour la vérification d'une autorisation d'établir un nouveau mot de passe, lequels sont conçus pour exécuter en concomitance le procédé selon la revendication 1.

12. Produit programme d'ordinateur ayant des instructions de commande appropriées, lors d'une exécution par un agencement de vérification, à mettre en oeuvre le procédé selon une des revendications de 1 à 10.
